# EUROPÄISCHE PATENTSCHRIFT

(11) **EP 3 325 846 B1**
(45) Veröffentlichungstag und Bekanntmachung des Hinweises auf die Patenterteilung: **14.04.2021**
(21) Anmeldenummer: 16738734.9
(22) Anmeldetag: 11.07.2016
(51) Int. Cl.: F16H 33/02

(54) **GETRIEBE MIT EINER TORSIONSFEDER UND VERFAHREN ZUM BETREIBEN EINES GETRIEBES**
TRANSMISSION HAVING A TORSION SPRING AND METHOD FOR OPERATING A TRANSMISSION
TRANSMISSION DOTÉE D'UN RESSORT DE TORSION ET PROCÉDÉ POUR FAIRE FONCTIONNER UNE TRANSMISSION

(30) Priorität: 21.07.2015 CH 10592015
(43) Veröffentlichungstag der Anmeldung: 30.05.2018
(73) Patentinhaber: Weilenmann, Martin, 8330 Pfäffikon (CH)
(72) Erfinder: Weilenmann, Martin, 8330 Pfäffikon (CH)
(74) Vertreter: Keller Schneider Patent- und Markenanwälte AG (Zürich)
(86) Internationale Anmeldenummer: PCT/EP2016/066433
(87) Internationale Veröffentlichungsnummer: WO 2017/012902

(56) Entgegenhaltungen:
- CN-Y- 2 168 993

## Beschreibung

### Technisches Gebiet

Die Erfindung betrifft ein Getriebe zur Übertragung eines Drehmomentes bzw. einer Leistung von einer auf einer Achse axial lagerbaren Antriebswelle auf eine Abtriebswelle bei stufenlos einstellbarem Übersetzungsverhältnis, umfassend ein Kupplungsrad und eine Torsionsfeder, wobei das Kupplungsrad auf derselben Achse drehbar gelagert ist und durch die Torsionsfeder mit der Abtriebswelle verbindbar ist, sowie umfassend ein erstes Kopplungsmittel zum Erzeugen und Aufheben einer drehfesten, flächigen, kraftschlüssigen ersten Kopplung zwischen der Antriebswelle und dem Kupplungsrad. Zudem betrifft die Erfindung ein Verfahren zum Betreiben eines Getriebes.

### Stand der Technik

Bei den meisten Anwendungen von Motoren liegen die günstigen Betriebsbereiche derselben bezüglich Drehgeschwindigkeit und Drehmoment nicht im Bereich der Anwendung, was Übersetzungen bzw. Getriebe notwendig macht.

Feste Übersetzungen und Schaltgetriebe basieren meist auf Zahnrad-Konstruktionen verschiedenster Varianten oder auf Zahnrad-Ketten-Transmissionen. Solche Übersetzungen haben nur eine oder eine geringe Anzahl Übersetzungsstufen. Es kann also nicht immer das für den gegebenen Betriebspunkt bezüglich des Verbrauchs oder Wirkungsgrads (oder anderer Kriterien) ideale Übersetzungsverhältnis gewählt werden. Schaltgetriebe weisen zudem begrenzt schnelle Schaltvorgänge auf, welche entweder durch Zugkraftunterbrechung oder durch verlustbehaftete Doppelkopplungsschaltungen gekennzeichnet sind.

Kontinuierlich verstellbare Getriebe weisen diesen Nachteil nicht auf.
Solche Getriebe werden in der Praxis "stufenlose Getriebe" genannt, da das Verhältnis von Eingangsdrehgeschwindigkeit und Ausgangsdrehgeschwindigkeit, in einem charakteristischen Betriebsbereich, frei gewählt werden kann. Dabei ist zu erwähnen, dass "stufenlos" (englisch: continuous variable) nicht mit "zeitlich kontinuierlich" (englisch: time continuous) verwechselt werden darf. Die Möglichkeiten bzw. Grenzen der zeitlichen Veränderung des Übersetzungsverhältnisses vom stufenlosen Getriebe wird weiter unten diskutiert.

Wird näherungsweise angenommen, dass ein solches stufenloses Getriebe verlustfrei arbeitet, so ist die Eingangsleistung gleich der Ausgangsleistung. Da die Leistung das Produkt von Drehmoment und Drehgeschwindigkeit ist, ist somit das Verhältnis von Eingangs- und Ausgangsdrehmoment gerade umgekehrt dem Verhältnis von Eingangs- und Ausgangsdrehgeschwindigkeit. Als Übersetzungsverhältnis wird in der Regel das Verhältnis von Ausgangs- zu Eingangsdrehgeschwindigkeit verstanden. Dies entspricht also dem Verhältnis von Ausgangs- zu Eingangsdrehmoment.

Um die Funktionsweise solcher stufenloser Getriebe besser zu verstehen, werden nun drei Betriebsfälle betrachtet. Dabei wird als Beispiel ein Strassenfahrzeug gewählt. Bei diesem besteht der Antrieb typischerweise aus einem Verbrennungsmotor, welcher ein Drehmoment auf seine Kurbelwelle erzeugt. Es wird hier angenommen, dass diese Kurbelwelle starr mit der Antriebswelle des Getriebes verbunden ist, weshalb diese Bauteile als eins betrachtet werden. Dieses Drehmoment bzw. die entsprechende Leistung wird vom stufenlosen Getriebe über den Antriebsstrang (Abtriebswelle des stufenlosen Getriebes) auf die Räder übertragen und treibt das Fahrzeug an. Es wird hier angenommen, dass die Räder fest mit der Fahrbahn verbunden sind (kein Gleiten oder Schlupf). Deshalb ist die Drehgeschwindigkeit der Abtriebswelle des stufenlosen Getriebes proportional zur Fahrzeuggeschwindigkeit. Der Proportionalitätsfaktor bildet sich aus dem Radradius und dem Übersetzungsverhältnis allfälliger fester Getriebe, die zwischen dem stufenlosen Getriebe und den Antriebsrädern (z.B. Differentialgetriebe) in den Antriebsstrang eingebaut sind. Um das Fahrzeug zu beschleunigen muss seine Massenträgheit überwunden werden. Diese Massenträgheit kann rechnerisch mit dem genannten Proportionalitätsfaktor an den Getriebeausgang übertragen werden.

Das stufenlose Getriebe befindet sich also zwischen der Kurbelwelle des Motors, welche ein relativ kleines Massenträgheitsmoment aufweist, und dem Antriebsstrang, dessen grosses Massenträgheitsmoment die mit dem Proportionalitätsfaktor umgerechnete Fahrzeugmasse enthält. Die meisten stufenlosen Getriebe beinhalten nur kleine bewegte Massen, welche nicht zwangsläufig mit der Antriebswelle (Kurbelwelle) oder der Abtriebswelle (Antriebsstrang) verbunden sind. Solche freie Massen werden in den folgenden Beispielen vereinfachend vernachlässigt. Wie erwähnt wird zudem angenommen, dass das stufenlose Getriebe verlustfrei arbeitet.

### Betriebsfall 1: Konstantes Fahren

Soll ein Fahrzeug konstant fahren, muss die vom Motor produzierte Leistung vollständig vom stufenlosen Getriebe aufgenommen und übertragen werden. Zudem muss diese Leistung im Gleichgewicht mit der Widerstandsleistung aller Fahrwiderstände sein. Die Widerstandsleistung des Fahrzeugs ist das Produkt der Fahrzeuggeschwindigkeit mit der Summe aller Widerstandskräfte. Diese sind die Luftwiderstandskraft, die Widerstandskraft durch Steigung und die Widerstandskraft durch Reibung nicht angetriebener Räder und Reibung im Antriebsstrang. Ebenso ist die Widerstandsleistung gleich dem Produkt von Abtriebsdrehgeschwindigkeit und Abtriebsdrehmoment. Bei einem stufenlosen Getriebe kann das Drehgeschwindigkeitsverhältnis in diesem stationären Zustand des konstanten Fahrens einen beliebigen Wert (innerhalb eines Betriebsbereichs) aufweisen. Das heisst, durch vorangehende Steuerung der Motorleistung und der Getriebeübersetzung wurde dieser stationäre Zustand auf einem beliebigen aber momentan konstanten Übersetzungsverhältnis eingestellt. Das heisst auch, dass das Verhältnis von Motordrehmoment und Abtriebsdrehmoment gerade diesem Übersetzungsverhältnis entsprechen. Welcher Motorbetriebspunkt für einen solchen stationären Zustand gewählt wird, kann dabei von verschiedenen Kriterien abhängen. Beispiele: Ideale Aufwärmdrehgeschwindigkeit während des Kaltstarts, verbrauchsoptimaler Betrieb oder schadstoffoptimaler Betrieb.

### Betriebsfall 2: Fahrzeugbeschleunigung mittels konstanter Motorleistung

Es wird hier angenommen, dass der Motor sich in einem konstanten Betriebspunkt befindet (z.B. bei maximaler Leistung oder im verbrauchsoptimalen Betriebspunkt). Das heisst, Motordrehgeschwindigkeit, Motordrehmoment und somit Motorleistung sind konstant. Damit die Kurbelwelle vom Motor nicht beschleunigt oder verzögert wird, muss das stufenlose Getriebe exakt das vom Motor produzierte Drehmoment und somit die entsprechende Leistung aufnehmen. Das Abtriebsdrehmoment und somit die Abtriebsleistung des Getriebes müssen einerseits grösser sein als das Widerstandsdrehmoment und somit die Widerstandsleistung des Fahrzeugs, damit dieses beschleunigt. Andererseits ist im verlustfreien Fall die Abtriebsleistung des stufenlosen Getriebes exakt gleich der Antriebsleistung. Da die Fahrzeuggeschwindigkeit und damit die Abtriebsdrehgeschwindigkeit des Getriebes laufend ändern, muss das Abtriebsdrehmoment des Getriebes laufend angepasst werden (denn es gilt: Abtriebsdrehmoment = Abtriebsleistung / Abtriebsdrehgeschwindigkeit).

Während dieses Beschleunigungsvorgangs kann sich die Widerstandsleistung am Fahrzeug laufend verändern, z.B. durch Zunahme des Luftwiderstands oder durch ändernde Steigung. Somit ist die sich entwickelnde Fahrzeuggeschwindigkeit und damit die Abtriebsdrehgeschwindigkeit à priori unbekannt. Die Getriebesteuerung muss deshalb laufend die Abtriebsdrehgeschwindigkeit messen und das Abtriebsdrehmoment steuern. Die Getriebesteuerung steuert also nicht direkt das Verhältnis der Drehgeschwindigkeiten (dieses entwickelt sich auf Grund der äusseren Einflüsse), sondern das Drehmomentverhältnis.

Dieses Beispiel gilt sinngemäss auch für Verzögerungen des Fahrzeugs. Dann muss natürlich die Widerstandsleistung grösser sein als die Antriebsleistung.

### Betriebsfall 3: Konstante Fahrt mit ändernder Antriebsdrehzahl

Das Fahrzeug soll hier eine konstante Geschwindigkeit fahren während der Zustand des Motors von einem ersten in einen zweiten Betriebspunkt verschoben werden soll. Dabei wird angenommen, dass die Widerstandskräfte und somit die Widerstandsleistung am Fahrzeug konstant bleibt. Somit muss die Antriebsleistung (Motorleistung) am Anfang und am Ende dieses Vorgangs gleich sein. Ist die Drehgeschwindigkeit am Ende des Vorgangs z.B. kleiner, muss das Motordrehmoment entsprechend grösser sein (und umgekehrt). Während dieses Vorgangs muss der Abtrieb des Getriebes bei konstanter Drehgeschwindigkeit eine konstante Leistung und somit ein konstantes Drehmoment abgeben. Die entsprechende Leistung muss das Getriebe von der Antriebswelle (Kurbelwelle) aufnehmen. Die Steuerung des Getriebes muss also das stufenlose Getriebe so führen, dass, angepasst an die laufend sinkende Drehgeschwindigkeit des Antriebs, ein laufend zunehmendes Drehmoment von der Antriebswelle aufgenommen wird.

Die Steuerung des Motors muss ihrerseits dafür sorgen, dass der Motor z.B. während einer Drehgeschwindigkeitsreduktion eine etwas kleinere Leistung (also momentan ein etwas kleineres Drehmoment) produziert, als was das stufenlose Getriebe aufnimmt. Nur so kann die Kurbelwelle (Massenträgheit) des Motors ihre Drehgeschwindigkeit reduzieren (Drallsatz).
Auch in diesem Betriebsfall muss die Getriebesteuerung physikalisch betrachtet ein Drehmoment (dasjenige an der Antriebswelle) steuern (verändern). Die Motordrehgeschwindigkeit ergibt sich aus der Verzögerung (bzw. Beschleunigung) der Kurbelwelle aufgrund der Differenz zwischen dem vom Motor produzierten und dem vom Getriebe abgegriffenen Drehmoment.

Allgemeine instationäre Betriebsfälle, bei denen sich sowohl die Eingangsdrehgeschwindigkeit (Motordrehzahl, Antriebsdrehgeschwindigkeit) wie auch die Ausgangsdrehgeschwindigkeit (Fahrzeuggeschwindigkeit, Abtriebsdrehgeschwindigkeit) verändern, können als Kombination von den oben beschriebenen Betriebsfällen 2 und 3 aufgefasst werden, wobei für beide Wellen Beschleunigungen mit beiderlei Vorzeichen möglich sind. Zusammenfassend: Da sowohl die Massenträgheitsmomente vom Antrieb (Motor) und vom Abtrieb (Fahrzeug) nicht vernachlässigbar sind, kann das stufenlose Getriebe bzw. seine Steuerung nicht direkt Drehgeschwindigkeitsverhältnisse einstellen. Beim Ändern des Übersetzungsverhältnisses muss das stufenlose Getriebe zusammen mit dem Motor bzw. der Motorsteuerung für ein Momentenungleichgewicht sorgen, damit die entsprechende trägen Massen beschleunigt bzw. verzögert werden. Trotz dieser physikalischen Tatsache wird in der Umgangssprache fälschlicherweise formuliert, dass das Getriebe sein Übersetzungsverhältnis steuert.
Diese gesamte Betrachtung ist unabhängig von der effektiven Auslegung des stufenlosen Getriebes, sie gilt allgemein.

Ferner ist zu beachten, dass diese Betrachtungen bislang davon ausgehen, dass die stufenlosen Getriebe im Betriebsfall 1 zeitlich konstante oder in den Betriebsfällen 2 und 3 kontinuierlich ändernde Drehmomente aufnehmen bzw. abgeben. Im Detail betrachtet erzeugen jedoch gewisse Varianten von Schaltgetrieben und von stufenlosen Getrieben aufgrund ihrer Bauweise zeitlich hochfrequent periodisch ändernde Drehmomente. Diese Unregelmässigkeiten werden z.B. bei Zahnrädern durch die Elastizität der Zähne oder deren Abnützung (Geometriefehler) oder bei Kettengetrieben (Motorrad) durch die Dehnung der Kettenglieder hervorgerufen. Jeder neue Zahneingriff erzeugt im Betrieb eine gewisse Drehmomentschwankung. Auch bei stufenlosen Kettenwandlern kann der Einlauf der Kettenglieder in die Kegelräder zu solchen Drehmomentschwankungen führen.
Da diese Schwankungen hochfrequent sind, also sich zeitlich rasch wiederholen, (typischerweise im Bereich von mehreren Millisekunden oder schneller) können der entsprechende Drehmomentüberschuss oder -mangel die trägen Massen von Kurbelwelle bzw. Fahrzeug nur in verschwindendem Masse beschleunigen oder verzögern, bzw. diese hochfrequenten Schwankungen werden durch die Elastizitäten der An- und Abtriebswellen geglättet. Das heisst, ein periodisches, zeitlich hinreichend rasch änderndes Drehmoment wirkt sich über eine Periode betrachtet gleich wie ein konstantes Drehmoment, welches dem Mittelwert des periodischen Drehmoments entspricht, aus.
Die nachfolgend beschriebene Erfindung nützt diese Tatsache, dass die Drehmomente ohne Nachteil hochfrequent periodisch verändert werden können, direkt aus.

Bekannte Ausführungsformen von stufenlosen Getrieben umfassen Reibradgetriebe, z.B. in Plattenanordnung, Kegelringgetriebe oder Toroid-Getriebe. Bei all diesen Getrieben wird die Kraft über Haftreibung von einem rotierenden Bauteil auf ein Nächstes übertragen. Durch eine andere Position des Kontaktpunkts in radialer Richtung ergibt sich ein anderes Übersetzungsverhältnis.
Gemäss der obigen Betrachtung muss während der Änderung des Übersetzungsverhältnisses zumindest auf einer Seite des Getriebes (Antrieb oder Abtrieb) ein Momentenungleichgewicht erzeugt werden. Nachteilig ist an all diesen Systemen, dass die Kraft durch Reibschluss in einer punktförmigen Zone übertragen wird, wenn Abplattungen vernachlässigt werden. Um ein Rutschen zu vermeiden müssen grosse Anpresskräfte herrschen, was zu hoben Belastungen der Bauteile führt.

Weiter ist nachteilig, dass das Übersetzungsverhältnis nur langsam und nicht im Stillstand verändert werden kann, da der eine Reibkörper auf dem anderen nicht rein tangential, wie in stationären Zuständen, sondern leicht radial abrollen muss, damit der Kontaktpunkt sich auf einen anderen Radius begibt.

Eine Alternative sind stufenlose Getriebe mit Riemen- oder Ketten-Konzepten. Bei diesen läuft ein Riemen oder eine Kette zwischen zwei Scheibenpaaren, welche auf der An- und Abtriebswelle angebracht sind. Die Scheiben sind auf den sich zugewandten Seiten so geformt, dass sich für den Riemen bzw. die Kette ein V- oder keilförmiger Zwischenraum bildet. Durch axiales Verschieben der einen Scheibe von jedem Scheibenpaar kann der Umlaufradius der Riemen und somit das Übersetzungsverhältnis eingestellt werden. Während dieses Vorgangs entwickeln sich zwischen den z.B. zusammenlaufenden Scheiben und der Kette (bzw. dem Riemen) Zwangsdrehmomente, welche zu dem oben beschriebenen Momentenungleichgewicht beitragen. Gleichzeitig muss die Kette (bzw. der Riemen) dabei ihre radiale Position zwischen den Scheibenpaaren verändern, was nur über mehrere Umdrehungen der Scheiben erfolgen kann, weil dem maximalen Radiusunterschied der Reibpunkte bei Einlauf und Auslauf der Kette (bzw. des Riemens) baulich enge Grenzen gesetzt sind.
Der Bereich der Kraftübertragung von den Scheiben an den Riemen oder die Kette ist theoretisch linienförmig, wird jedoch durch Dehnungs-Phänomene auf einen kleinen Bereich des Umfangs begrenzt. Dadurch weisen diese Getriebe annähernd die gleichen Nachteile wie die Reibradgetriebe auf, nämlich den punktförmigen Reibschluss, welcher grosse Anpresskräfte bedingt und nur begrenzt schnelle Übersetzungsänderungen zulässt.

Wie erwähnt können gestufte Getriebe nicht beliebige Übersetzungsverhältnisse darstellen. Alle bekannten mechanischen stufenlosen Getriebe weisen den Nachteil auf, dass die Kraft durch Reibung in einer Punkt- oder Linien-förmigen Zone übertragen wird, was hohe Anpresskräfte und damit hohe Oberflächenbelastung für die Bauteile bedeutet. Zudem kann bei diesen das Übersetzungsverhältnis nur in Bewegung und nur mit begrenzter Geschwindigkeit geändert werden.

Insbesondere die Antriebsstränge von Strassenfahrzeugen erleben in der Praxis häufige und sehr rasch ändernde Lasten. Nur stufenlos und rasch variierende Getriebe würden es erlauben, die Antriebsmotoren bei diesen Belastungsprofilen immer in einem optimalen Betriebszustand zu betreiben. Diese Optimalität kann dabei z.B. den Verbrauch, Schadstoffe oder aber auch den Verschleiss oder andere Kriterien minimieren.

Die Dokumente WO2012008245 A1 und WO2013008624 A1 beschreiben stufenlose Getriebe mit Viergelenkbögen. Am Antrieb sind mehrere Viergelenkbögen mit entsprechenden Schwenkkörpern angeordnet. Alle diese Schwenkkörper können sich so über Freiläufe mit der Abtriebswelle verbinden, sodass immer der gerade Schnellste im Eingriff ist und Energie überträgt. Die stufenlose Übersetzung kommt zu Stande, indem die Exzentrizität der Viergelenkbögen variiert wird. Die Bewegung der Abtriebswelle wird so nicht exakt kontinuierlich sondern wellenförmig, da sie sich aus den Maximalbereichen der Schwingbewegungen der Schwingkörper zusammensetzt. Da hier die Bewegung (Drehgeschwindigkeit) der Abtriebswelle zwangsläufig wellenförmig ist, zeigt diese Lösung eine völlig andere Charakteristik als wenn die Drehmomente, wie oben beschrieben, hochfrequent schwanken. Insbesondere sind hier wesentlich stärkere Vibrationen zu erwarten.

In der GB 2400422 A ist ein weiteres stufenloses Getriebe beschrieben, bei dem eine Feder zeitweise Energie von einer Antriebswelle aufnimmt und an eine konzentrisch zur Feder angeordnete Abtriebswelle abgibt und dabei ins Schwingen gerät. Absätze an der Feder, an denen sie zeitweise an Balken ansteht, sorgen für die Kraftübertragung. Das beschriebene Getriebe weist einen komplizierten Aufbau auf, wobei nicht klar wird, wie ein verlässlicher Antrieb der Abtriebswelle gesteuert durchführbar ist.

Das Dokument US 2,864,259 beschreibt ein stufenloses Getriebe bei welchem über Excenter (Viergelenkbögen) eine gleichmässige Drehbewegung in Pendelbewegungen transformiert wird und über Freilaufkupplungen (overrunning clutch) diese Pendelbewegungen eine Zwischenwelle vorantreiben, wobei zu jedem Zeitpunkt jene Pendelbewegung, welche in Vorwärtsrichtung gerade am Schnellsten ist, im Eingriff ist. Dadurch führt diese Zwischenwelle eine wellige Vorwärtsbewegung aus. Sie ist über einen Torsionsstab (Torsionsfeder) mit dem Abtrieb verbunden. Durch den Torsionsstab treibt die Zwischenwelle den Abtrieb an. Wie der Text erwähnt, stellt sich bei einer konstanten Drehgeschwindigkeit des Antriebs am Abtrieb eine Drehgeschwindigkeit ein, welche von der Last, also dem Lastmoment am Abtrieb abhängt, was nachteiligt ist. Es sind Getriebe gewünscht, die bei beliebigen Lasten (im Betriebsbereich) beliebige Übersetzungsverhältnisse ermöglichen können. Die US 2,864,259 zeichnet sich durch die Verwendung von passiven Freilaufkupplungen aus, welche keine Kopplungen zu frei wählbaren Zeitpunkten ermöglichen

CN 2 168 993 Y offenbart einen Energiespeicherapparat mit Torsionsfeder.

### Darstellung der Erfindung

Aufgabe der vorliegenden Erfindung ist es, ein stufenloses, mechatronisches Getriebe eingangs beschriebener Art anzugeben, das einfach und prozesssicher aufgebaut ist und bei dem Reibverluste und Verschleiss durch schleifende Kopplungen gering sind oder punktförmige Übertragungen durch Ketten oder Riemen auftreten. Diese Erfindung nutzt die oben beschriebene Tatsache, dass ein hochfrequent änderndes Drehmoment auf die trägen Massen des Antriebs (z.B. Kurbelwelle eines Verbrennungsmotors) und des Abtriebs (Antriebsstrang und Fahrzeug) im Wesentlichen die gleiche Wirkung hat wie ein konstantes Drehmoment, welches dem zeitlichen Durchschnittswert des hochfrequent ändernden Drehmoments entspricht. Eine weitere Aufgabe der vorliegenden Erfindung besteht darin, ein Verfahren zu beschreiben, das eine Kraftübertragung mittels eines solchen mechatronischen Getriebes ausführt.

Die Aufgabe wird gelöst durch die Kennzeichen der unabhängigen Patentansprüche. Bevorzugte Vorrichtungen sind in den Unteransprüchen angegeben.

Die nachfolgend beschriebene Idee der Erfindung beschreibt, wie das Getriebe innerhalb einer zeitlich kurzen Periode (Zyklus) arbeitet. Ob dabei das Getriebe mit einem konstanten Übersetzungsverhältnis arbeitet (Betriebsfall 1), sich die Drehgeschwindigkeit des Abtriebs ändert (Betriebsfall 2), sich die Drehgeschwindigkeit des Antriebs ändert (Betriebsfall 3) oder beide Drehgeschwindigkeiten ändern (Kombination der Betriebsfälle 2 & 3) ergibt sich aus den Momentengleichgewichten der Antriebs- und der Abtriebswellen über eine oder mehrere ganze solche Perioden (Zyklen).

Erfindungsgemäss umfasst das Getriebe eine Abstützeinrichtung (z.B. ein Ring, eine Scheibe oder eine Hohlwelle), welche mit einer festen Übersetzung von 1:X mit der Abtriebswelle verbunden und drehbar ist, wobei X jede reelle Zahl zwischen -10 und 1 sein kann. Zudem umfasst das erfindungsgemässe Getriebe ein zweites Kopplungsmittel zum Erzeugen und Aufheben einer drehfesten, kraftschlüssigen zweiten Kopplung zwischen der Abstützeinrichtung und dem Kupplungsrad.

Die der Erfindung zugrunde liegende Idee besteht darin, dass Kopplungen zwischen sich drehenden Teilen nur dann erzeugt werden, wenn diese dieselbe Drehgeschwindigkeit haben. In diesem Fall entsteht beim Koppeln kaum Reibung und somit kaum Energieverlust. Damit dies erreicht werden kann, wird das Kupplungsrad durch die Torsionsfeder mit der Abtriebswelle verbunden, sodass das Kupplungsrad durch Aufnahme der in der Torsionsfeder gespeicherten Energie auch schnellere Drehgeschwindigkeiten erreichen kann als die Abtriebswelle, insbesondere auch die viel höhere Drehgeschwindigkeit der Antriebswelle.

Mit jedem Arbeitskreislauf schwenkt die Torsionsfeder je einmal in seine Extremlage aus, wodurch das einseitig daran angebrachte Kupplungsrad unterschiedlich beschleunigt und abgebremst wird. In einem Moment des Stillstands lässt sich beispielsweise eine Kopplung zwischen dem Kupplungsrad und der ebenfalls stillstehenden Abstützeinrichtung reibungslos durchführen.

Im erfindungsgemässen Verfahren zum Übertragen eines Drehmoments oder einer Leistung von einer schnell drehenden Antriebswelle auf eine langsamer drehende Abtriebswelle wird das Kupplungsrad durch das erste Kopplungsmittel an die Antriebswelle gekoppelt, sobald das Kupplungsrad und die Antriebswelle exakt dieselbe Drehgeschwindigkeit aufweisen. Hierbei wird angenommen, dass vorangehend Energie in der Feder gespeichert wurde, welche das Kupplungsrad auf die (höhere) Drehgeschwindigkeit der Antriebswelle beschleunigt hat. Es zeigt sich in der Folge, dass diese Energie am Ende des vorangehenden Arbeitskreislaufs einfach vorliegt. Der Anfahrvorgang wird weiter unten erläutert. Dadurch wird in der Folge die Torsionsfeder gespannt und gleichzeitig Energie von der Antriebswelle über die Torsionsfeder auf die Abtriebswelle übertragen. Bei einer hohen Spannung der Torsionsfeder wird das Kupplungsrad von der Antriebswelle entkoppelt, um das Kupplungsrad mit sinkender Drehgeschwindigkeit im Freilauf weiterdrehen zu lassen. Sobald das Kupplungsrad und die Abstützeinrichtung exakt dieselbe Drehgeschwindigkeit aufweisen wird das Kupplungsrad durch das zweite Kopplungsmittel an die Abstützeinrichtung gekoppelt, um Energie der Torsionsfeder auf die Abtriebswelle zu übertragen. Bei einer niedrigen Spannung der Torsionsfeder wird schliesslich das Kupplungsrad von der Abstützeinrichtung entkoppelt, um das Kupplungsrad im Freilauf wieder aufschwingen zu lassen. Anschliessend wird das Verfahren wieder von vorne begonnen.

### Kurze Beschreibung der Zeichnungen

Im Folgenden wird die Erfindung unter Beizug der Zeichnungen näher erklärt. Es zeigen
- Fig. 1: eine schematische Darstellung eines erfindungsgemässen Getriebes in perspektivischer Ansicht;
- Fig. 2: einen Verlauf zweier Zyklen als Funktion der Zeit, insbesondere;
- Fig. 2a: die Drehgeschwindigkeiten von Antriebs- und Abtriebswelle;
- Fig. 2b: den Verdrehwinkel der Torsionsfeder;
- Fig. 2c: die Drehgeschwindigkeit des Kupplungsrades;
- Fig. 2d: das auf die Abtriebswelle wirkende Moment;
- Fig. 2e: die übertragene Energie

### Wege zur Ausführung der Erfindung

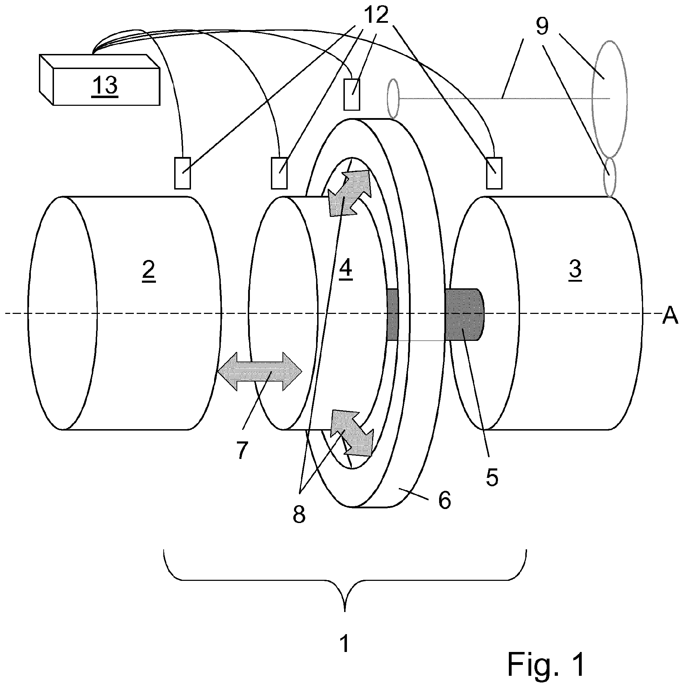

Die Fig. 1 zeigt in einer schematischen perspektivischen Darstellung ein erfindungsgemässes mechatronisches Getriebe 1 zur stufenlosen Übertragung eines Drehmomentes bzw. einer Leistung von einer auf einer Achse A axial lagerbaren Antriebswelle 2 auf eine Abtriebswelle 3. Das Getriebe 1 umfasst ein Kupplungsrad 4 und eine Torsionsfeder 5, wobei das Kupplungsrad 4 auf derselben Achse A drehbar gelagert ist und durch die Torsionsfeder 5 mit der Abtriebswelle 3 verbunden ist. Zudem umfasst das Getriebe 1 ein erstes Kopplungsmittel 7 zum Erzeugen und Aufheben einer drehfesten, flächigen, kraftschlüssigen ersten Kopplung zwischen der Antriebswelle 2 und dem Kupplungsrad 4. Erfindungsgemäss umfasst das Getriebe 1 zudem eine Abstützeinrichtung 6, welche mit einer festen Übersetzung z.B. mittels eines Zahnradgetriebes 9 von 1:X mit der Abtriebswelle 3 verbunden und um die Achse A drehbar gelagert ist, wobei X jede reelle Zahl zwischen ca. -10 und 1 sein kann. Insbesondere kann X Null sein, womit die Abstützeinrichtung 6 fest, beispielsweise mit einem Gehäuse des Getriebes, verbunden ist. In diesem Spezialfall entfällt das Zahnradgetriebe 9. In den anderen Fällen kann die Abstützungseinrichtung 6 als Ring, Scheibe oder Hohlwelle ausgestaltet sein, welche um die Achse A drehbar gelagert ist und wie erwähnt mit einer festen Übersetzung kleiner 1 (z.B. durch Zahnräder) mit der Abtriebswelle 3 verbunden ist.

Zudem umfasst das Getriebe 1 ein zweites Kopplungsmittel 8 zum Erzeugen und Aufheben einer drehfesten, kraftschlüssigen zweiten Kopplung zwischen der Abstützeinrichtung 6 und dem Kupplungsrad 4.

Vorzugsweise ist das Kupplungsrad 4 koaxial zur Abtriebswelle 3 angeordnet, damit die Antriebswelle 2, das Kupplungsrad 4 und die Abtriebswelle 3 alle auf derselben Achse A angeordnet gelagert sind.

Das erste und zweite Kopplungsmittel 7 und 8 können vorzugsweise je eine magnetische oder mechanische Kupplung mit einem Anpressmechanismus oder anderweitige Kupplung zwischen jeweils der Antriebswelle 2 oder der Abstützeinrichtung 6 und dem Kupplungsrad 4 umfassen.

Die Kopplungen werden erfindungsgemäss jeweils nur geschlossen, wenn die Komponenten beidseits der Kupplung dieselbe Drehgeschwindigkeit aufweisen. Dadurch wird verhindert, dass Abrieb entsteht, und Verluste werden minimiert.

Ist das erste Kopplungsmittel 7 aktiviert, dann bewegen sich das Kupplungsrad 4 und die Antriebswelle 2 zwingend mit derselben Drehgeschwindigkeit. Sobald dieses erste Kopplungsmittel 7 wieder gelöst ist, können sich Kupplungsrad 4 und Antriebswelle 2 wieder mit unterschiedlichen Drehgeschwindigkeiten um die Achse A bewegen.

Ist das zweite Kopplungsmittel 8 aktiviert, dann bewegen sich das Kupplungsrad 4 und die Abstützeinrichtung 6 zwingend mit derselben Drehgeschwindigkeit oder stehen beide still. Diese Drehgeschwindigkeit ist kleiner als die Drehgeschwindigkeit der Abtriebswelle 3, sie kann auch in entgegengesetzter Richtung drehen. Ihr Übersetzungsverhältnis zur Abtriebswelle 3 ist stets konstant und kleiner oder gleich 1. Dies führt dazu, dass sich die Torsionsfeder 5 in den Schritten, in denen das Kopplungsmittel 8 geschlossen ist, entspannt und Energie an den Abtrieb 3 abgibt. Sobald dieses zweite Kopplungsmittel 8 wieder gelöst ist, können sich Kupplungsrad 4 und Abstützeinrichtung 6 wieder mit unterschiedlichen Drehgeschwindigkeiten um die Achse A bewegen. Die Kopplungsmittel 7, 8, befinden sich zwischen der Antriebswelle 2 und dem Kupplungsrad 4 resp. zwischen der Abstützeinrichtung 6 und dem Kupplungsrad 4 und sind in Fig. 1 lediglich als Pfeile dargestellt.

Insbesondere kann das erfindungsgemässe Getriebe Sensoren 12 umfassen. Diese dienen der Bestimmung von absoluten und/oder relativen Drehgeschwindigkeiten vom Kupplungsrad 4 sowie von der Antriebswelle 2, der Abtriebswelle 3 und/oder ev. der Abstützeinrichtung 6.

Mit solchen Sensoren 12 soll insbesondere festgestellt werden können, wann das Kupplungsrad 4 und jeweils die Antriebswelle 2 resp. die Abstützeinrichtung 6 dieselbe momentane Drehgeschwindigkeiten haben. Ist dies der Fall, so kann die Antriebswelle 2 resp. die Abstützeinrichtung 6 durch das entsprechende Kopplungsmittel 7 oder 8 an das Kupplungsrad 4 angekoppelt werden, ohne dass Reibverluste auftreten. Solche Sensoren 12 können beispielsweise optische Sensoren sein, welche ein feines Raster, welches am Kupplungsrad 4, an der Antriebswelle 2, an der Abtriebswelle 3 und/oder an der Abstützeinrichtung 6 angebracht ist, optisch erfassen.

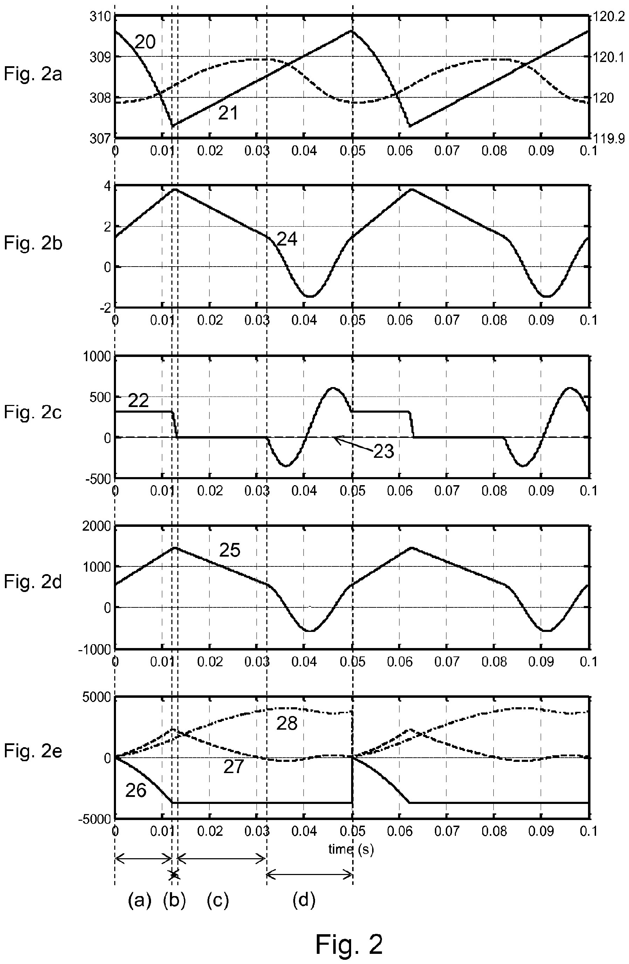

Eine Steuereinheit 13 kann schliesslich auf Grund der ermittelten Drehgeschwindigkeiten zu geeigneten Zeitpunkten die Kopplungen 7 und 8 schliessen und lösen. Entsprechende Verbindungsleitungen von der Steuereinheit 13 zu den Kopplungsmitteln 7, 8, sind in Fig. 1 nicht dargestellt. Eine Übertragung der Daten von den Sensoren 12 zur Steuereinheit 13 und von dieser zu den Kopplungsmitteln 7 und 8 mittels Telemetrie ist auch möglich. Die Steuerung 13 muss auch mit dem Benutzer sowie typischerweise mit der Antriebssteuerung verbunden sein, welche jeweils die gewünschte Beschleunigung, Leistung oder das Drehmoment vorgeben. Auch diese Verbindungen sind nicht dargestellt. Die Steuerung berechnet die jeweils geeigneten Zeitpunkte für das Koppeln und Lösen der Kopplungsmittel 7 und 8 auf Grund der vom Benutzer bzw. der Antriebssteuerung vorgegebenen Angaben und definiert so die Schritte (a) bis (d) des Betriebs, wie in Figur 2 dargestellt. Die Benutzervorgaben können beispielsweise durch die Betätigung eines Gaspedals eines Fahrzeuges übermittelt werden.

In besonderen Fällen kann das erfindungsgemässe Getriebe 1 über mindestens eine zweite Abstützeinrichtung 6' verfügen, welche mit einer anderen festen Übersetzung X' als die erste Abstützeinrichtung 6 mit der Abtriebswelle 3 verbunden und drehbar angeordnet ist. Je nach Vorgaben kann dann jeweils mit der ersten oder der zweiten Abstützeinrichtung 6, 6' gearbeitet werden. Die zweite Abstützeinrichtung 6' kann ansonsten identisch zur ersten Abstützeinrichtung 6 ausgestaltet sein und ist in der Figur nicht angegeben. Die Verwendung von mindestens einer zweiten Abstützeinrichtung 6' mit einer anderen festen Übersetzung X' erweitert die Spreizung und den Leistungsbereich des Getriebes.

Erfindungsgemäss kann die Torsionsfeder 5 eine progressive Charakteristik aufweisen. Dies kann wiederum zu Vorteilen der Übertragungscharakteristik führen.

Beim erfindungsgemässen zyklischen Verfahren zum Übertragen eines Drehmomentes bzw. einer Leistung von einer Antriebswelle 2 auf eine Abtriebswelle 3 unter Verwendung eines erfindungsgemässen mechatronischen Getriebes 1 werden folgende Schritte durchgeführt, die unter Mithilfe der Fig. 2 hier veranschaulicht beschrieben werden. Die einzelnen, zeitlich aufeinander folgenden Schritte (a) bis (d) eines Arbeitszyklus sind auch in Fig. 2e unten angegeben.

Fig. 2a zeigt die Drehgeschwindigkeiten 20 und 21 des Antriebs 2 und des Abtriebs 3. Die Drehgeschwindigkeit des Kupplungsrades 22 ist in Fig. 2c dargestellt. Zu gewissen Zeiten entspricht sie der Drehgeschwindigkeit 23 der Abstützeinrichtung 6, insbesondere, wenn diese aneinander gekoppelt sind. In Fig. 2b ist der Verdrehwinkel 24 der Torsionsfeder 5 dargestellt. In allen Figuren 2a bis 2e sind zwei komplette Zyklen des beanspruchten Verfahrens dargestellt, wobei jeder Zyklus 0.05 s dauert.

In Fig. 2d ist das Moment 25 dargestellt, das auf die Abtriebswelle 3 wirkt. Fig. 2e zeigt die Energien, die von einzelnen Komponenten während eines Arbeitszyklus abgegeben resp. aufgenommen werden. Die von der Antriebswelle abgegebene Energie 26 (Energieabgabe negativ dargestellt) entspricht dabei der Summe der Energien 27 und 28. Die Energie 27 wird von der Torsionsfeder 5 und dem Kupplungsrad 4 zusammen aufgenommen. Die Energie 28 wird von der Abtriebswelle 3 aufgenommen. In den Bereichen, insbesondere im Schritt (c), in denen die von der Antriebswelle abgegebene Energie 26 null ist, bekommt die Abtriebswelle 3 die Energie 28, welche der Energie 27 entspricht, die von der Torsionsfeder 5 und dem Kupplungsrad 4 abgegeben wird und daher abnimmt.

Die Schritte (a) bis (d) eines Zyklus werden in der Folge am Beispiel von Figur 2 beschrieben:
Bei dieser Beschreibung wird davon ausgegangen, dass das Getriebe bereits in Betrieb ist. Das heisst, es wird angenommen, dass die Antriebswelle 2 zu Beginn mit einer Drehgeschwindigkeit (Winkelgeschwindigkeit) von ca. 310 rad/s (= ca. 3000 Umdrehungen/min) rotiert. Die Abtriebswelle 3 dreht zu Beginn mit einer niedrigeren Drehgeschwindigkeit von ca. 120 rad/s (= ca. 1150 Umdrehungen/min). Die Torsionsfeder 5 wurde während des Anlaufens des ganzen Systems vorgespannt. Sind die beiden Kopplungsmittel 7 und 8 getrennt, schwingt das Kupplungsrad 4 aufgrund dieser Vorspannung auf der Torsionsfeder 5 rotativ mit der Eigenfrequenz dieses Feder-Masse-Systems um die Achse A. Dieser Zustand wird auch als Freilauf bezeichnet. Von der Abtriebswelle 3 aus gesehen schwingt das Kupplungsrad 4 rotativ vor und zurück. Vom Inertialsystem aus gesehen rotiert das Kupplungsrad einmal langsamer und einmal schneller als die Abtriebswelle 3. Während dieser Schwingung (Schritt 23 in Figur 2c) erreicht das Kupplungsrad 4 hohe Drehgeschwindigkeiten, welche über der Drehgeschwindigkeit der Antriebswelle 2 liegen. Auch erreicht es Drehgeschwindigkeiten, welche negativ sind, das heisst es dreht kurzzeitig rückwärts. Die mittlere Drehgeschwindigkeit des Kupplungsrads 4 ist identisch mit der Drehgeschwindigkeit der Abtriebswelle 3.

Zur Drehmoment- bzw. Leistungsübertragung erfolgen nun folgende vier Schritte: In einem Zeitpunkt in dem das Kupplungsrad 4 und die Antriebswelle 2 exakt dieselbe Drehgeschwindigkeiten 22, 20 aufweisen und die Torsionsfeder vorwärts gespannt ist, wird Schritt (a) eingeleitet, indem das Kupplungsrad 4 durch das erste Kopplungsmittel 7 an die Antriebswelle 2 angekoppelt wird. Während des gesamten Schrittes (a) dreht sich das Kupplungsrad 4 mit derselben Drehgeschwindigkeit 22 resp. 20 wie die Antriebswelle 2. In der Folge wird die Torsionsfeder 5 zu einem maximalen Verdrehwinkel 24 gespannt, und gleichzeitig wird Energie 26 von der Antriebswelle 2 über die Torsionsfeder 5 als Energie 28 auf die Abtriebswelle 3 übertragen. Ein Teil dieser Energie 26 wird als Energie 27 von der Torsionsfeder 5 und dem Kupplungsrad 4 aufgenommen. Diese Energieübertragungen haben zur Folge, dass die Antriebswelle 2 leicht abgebremst wird. Im Beispiel sinkt die Drehgeschwindigkeit der Antriebswelle weniger als 1 %. Gleichzeitig wird die Abtriebswelle leicht (weniger als ein Promille) beschleunigt.

Bei einer hohen Spannung der Torsionsfeder 5, demnach bei einem hohen Verdrehwinkel 24, wird Schritt (b) eingeleitet, indem das Kupplungsrad 4 von der Antriebswelle 2 entkoppelt wird. Dadurch dreht nun das Kupplungsrad 4 mit sinkender Drehgeschwindigkeit im Freilauf weiter. In diesem Schritt (b) wird von der Antriebswelle 2 keine Energie übertragen. Das Kupplungsrad 4, welches in der freien Schwingung verzögert wird, gibt einen Teil seiner Energie an die sich weiter spannende Torsionsfeder 5 ab. Einen weiteren Teil gibt es auf die Abtriebswelle 3 ab. Diese Energiemengen sind vergleichsweise klein. Die Abtriebswelle 3 beschleunigt in diesem Schritt somit minimal. Sobald das Kupplungsrad 4 und die Abstützeinrichtung 6 exakt dieselbe Drehgeschwindigkeiten 22, 23 aufweisen, wird Schritt (c) eingeleitet, indem das Kupplungsrad 4 durch das zweite Kopplungsmittel 8 an die Abstützeinrichtung 6 gekoppelt wird. Im Beispiel besteht die Abstützeinrichtung 6 lediglich aus einem typischerweise kreisförmigen Teil des Gehäuses, welches für die Kopplungseinrichtung 8 als Gegenstück zum Kupplungsrad 4 dient. Das heisst das Kupplungsrad 4 wird im Moment, in dem seine absolute Drehgeschwindigkeit gerade Null ist, kraftschlüssig mit dem Gehäuse verbunden.

Allgemein kann die Abstützeinrichtung 6 als Ring, Scheibe oder Hohlwelle ausgeführt betrachtet werden, welche um die Achse A drehbar gelagert ist und welche über ein Getriebe 9 mit fester Übersetzung kleiner als 1, z.B. mit dem Zahnradgetriebe 9, mit der Abtriebswelle 3 verbunden ist. Das heisst sobald die Abtriebswelle 3 sich dreht, dreht die Abstützeinrichtung 6 ebenfalls, jedoch langsamer oder rückwärts. Auch in diesem allgemeinen Fall ist die Abstützeinrichtung 6 so gestaltet, dass die Kopplungseinrichtung 8 sie kraftschlüssig mit dem Kupplungsrad 4 verbinden kann.

Während des gesamten Schrittes (c) dreht sich das Kupplungsrad 4 mit derselben Drehgeschwindigkeit 23 wie die Abstützeinrichtung 6 (im Beispiel stehen beide still). Da die Abstützeinrichtung 6 langsamer dreht als die Abtriebswelle 3 (bzw. still steht) entspannt sich die Torsionsfeder 5 und es wird die Energie 27, die im Schritt (a) von der Torsionsfeder 5 aufgenommen wurde, abgegeben und gleichzeitig als Energie 28 von der Abtriebswelle 3 aufgenommen. Dadurch wird die Abtriebswelle etwas beschleunigt. Im Beispiel etwas weniger als 1 %.

Bei einer niedrigen Spannung der Torsionsfeder 5, demnach bei einem geringen Verdrehwinkel 24 der Torsionsfeder 5, der etwa dem Verdrehwinkel 24 zu Beginn des Schrittes (a) entspricht, wird der letzte Schritt (d) eingeleitet, indem das Kupplungsrad 4 von der Abstützeinrichtung 6 wieder entkoppelt wird. Das Kupplungsrad 4 befindet sich während des gesamten Schrittes (d) im Freilauf und schwingt fortan gegenüber der Abtriebswelle 3 rotativ vor und zurück. In diesem Schritt tauschen das Kupplungsrad 4 und die Torsionsfeder 5 pendelnd kinetische Energie und potentielle (Feder-)Energie miteinander aus (nicht dargestellt). Eine geringe Menge Energie wird auch mit dem Abtrieb 3 ausgetauscht: die Energien 27 und 28 pendeln dabei gegenläufig.

Zu einem Zeitpunkt, an dem sich das Kupplungsrad 4 bei sinkender Drehgeschwindigkeit wieder exakt gleich schnell dreht wie die Antriebswelle 2, ist der Schritt (d) und mit diesem auch der ganze Arbeitszyklus beendet, der die Schritte (a) bis (d) umfasst. Zu diesem Zeitpunkt wird ein neuer Zyklus eingeleitet, indem erneut mit dem Schritt (a) begonnen wird.

Der in Fig. 2 dargestellte Fall entspricht einem Betriebsfall 1. Ein Antrieb (Motor) liefert eine konstante Leistung (Energie pro Zeit) auf die Antriebswelle 2, während Widerstände an der Abtriebswelle 3 exakt die gleiche konstante Leistung aufnehmen. Die Antriebswelle 2 wird in Schritt (a) durch Energieentzug etwas verzögert. Während den Schritten (b) bis (d) wird ihr keine weitere Energie entzogen, jedoch wird ihr durch den Antrieb (Motor) während allen Schritten konstant Energie zugeführt. Das Total der zugeführten Energie ist dabei gleich der im Schritt (a) abgeführten Energie. Es besteht also im Durchschnitt ein Leistungsgleichgewicht, weshalb die Drehgeschwindigkeit der Antriebswelle 2 am Anfang und am Ende des ganzen Ablaufs exakt die gleiche ist.

Ähnlich gilt für die Abtriebswelle 3: Während sie in den Schritten (a) bis (c) Energie von der Antriebswelle 2 und der Torsionsfeder 5 aufnimmt, gibt sie im Schritt (d) etwas Energie an die Torsionsfeder 5 zurück. Die Summe der ausgetauschten Energiemengen ist gerade gleich jener Energie, welche in der gesamten Zeit durch die Widerstände vom Abrieb weggenommen werden. Somit weist die Abtriebswelle 3 am Anfang und am Ende des ganzen Ablaufs exakt die gleiche Drehgeschwindigkeit auf. Der ganze Ablauf kann sich also über längere Zeit exakt wiederholen, was einem stationären Betrieb entspricht.

Dieser Ablauf kann (innerhalb eines technischen Bereichs) bei beliebigen Übersetzungsverhältnissen stattfinden, weshalb diese Erfindung sich wie ein stufenloses Getriebe verhält.

Müsste bei den gleichen Drehgeschwindigkeiten von Antriebswelle 2 und Abtriebswelle 3 ein anderes durchschnittliches Drehmoment (eine andere Leistung) übertragen werden, würden die Dauern der Schritte (a) und (c) entsprechend angepasst. Z. B. wären bei einer kleineren übertragenen Leistung die Schritte (a) und (c) kürzer, wodurch die Torsionsfeder 5 weniger Energie aufnimmt und abgibt.

Würde sich dieses Getriebe im Betriebsfall 2 befinden, würde sich für die Antriebswelle 2 das gleiche Bild ergeben wie oben. Die Widerstände (Wiederstandsleistung) am Abtrieb wären jedoch kleiner als die vom Getriebe übertragene Leistung. Dadurch wäre die Drehgeschwindigkeit der Abtriebswelle 3 nach jedem ganzen Zyklus etwas höher als davor, wodurch die Zeitpunkte, bei welchen die Kopplungsmittel 7 und 8 durch die Steuerung geöffnet und geschlossen werden müssen, von Zyklus zu Zyklus laufend leicht angepasst werden müssen.

Im Betriebsfall 3 wäre die vom Antrieb (Motor) auf die Antriebswelle 2 eingebrachte Leistung etwas kleiner als die vom Getriebe aufgenommene mittlere Leistung (Energie pro Zeit), wodurch die Drehgeschwindigkeit der Antriebswelle 2 nach dem ganzen Zyklus kleiner wäre als zu Beginn, also insgesamt abnehmen würde. An der Abtriebswelle 3 wären die Verhältnisse weiterhin konstant wie in Betriebsfall 1. Auch hier müssten die Zeitpunkte bei welchen die Kopplungsmittel 7 & 8 durch die Steuerung geöffnet und geschlossen werden, von Zyklus zu Zyklus laufend angepasst werden.

Die Veränderung des Übersetzungsverhältnisses wird also nicht über eine mechanische Krafteinwirkung auf ein Bauteil (Hebel) wie bei anderen stufenlosen Getrieben eingeleitet, sondern durch verändern der Schaltzeitpunkte der Kopplungen und dadurch der übertragenen durchschnittlichen Leistungen. Sie werden also durch die Steuerung vorausberechnet und geführt, weshalb das Getriebe als "mechatronisch" bezeichnet wird.

In einem bevorzugten Verfahren ist die Drehgeschwindigkeit 23 der Abstützeinrichtung 6 konstant Null. Somit kann diese fest montiert werden und muss nicht auf einer Achse drehbar gelagert werden.

Insbesondere sollte ein kompletter Zyklus von (a) bis zum nächsten (a) für Automobile typischerweise höchstens 50 ms dauern um im Antriebsstrang keine zu tieffrequenten Vibrationen anzuregen. Dadurch wird die Übertragung von einem Benutzer als ruckfrei empfunden. Die Reaktion des Systems auf einen veränderten Steuerbefehl dauert maximal zwei solcher Zyklen also höchstens 100 ms. Eine solche Reaktionsdauer wird vom Benutzer als verzugslos empfunden. Die Zeit zum Koppeln und Entkoppeln der Kopplungsmittel 7, 8 sollte jeweils höchstens etwa einen Hundertstel der Zykluszeit dauern, also z.B. etwa 0.5 ms, damit die oben genannte Bedingung der Kopplung bei gleicher Drehgeschwindigkeit der Kopplungspartner erfüllt ist. Insbesondere kann eine Steuereinheit 13 die Einleitung der Schritte (a) bis (d) veranlassen. Diese Steuerung 13 nimmt auch die Befehle des Benutzers entgegen und koordiniert die Leistungsübertragung mit der Antriebssteuerung.

Für das Übertragen von kleinen Leistungen kann es von Vorteil sein, wenn die Dauer des kompletten Zyklus von (a) bis zum nächsten (a) durch eine Wartephase verlängert wird. Eine solche Wartephase kann eingeführt werden, indem zwischen der Abtriebswelle 3 und dem Kupplungsrad 4 ein weiteres Kopplungsmittel eingeführt wird (nicht eingezeichnet). Auch dieses Kopplungsmittel wird nur gekoppelt, wenn das Kupplungsrad 4 und die Abtriebswelle 3 die gleiche Drehgeschwindigkeiten 22, 21 aufweisen, damit keine Verluste auftreten. Nach einer gewissen Zeit wird das Kopplungsmittel wieder gelöst. Solange diese Kopplung aktiviert ist, behält die Torsionsfeder ihre Vorspannung und gibt weder Energie ab noch nimmt sie Energie auf. Typischerweise wird diese Kopplung im Schritt (d) aktiviert. Dadurch kann die Dauer des kompletten Zyklus von (a) bis zum nächsten (a) verlängert werden. Insbesondere kann damit die Dauer des kompletten Zyklus für alle Betriebsfälle konstant gewählt werden, was für das Vermeiden von Resonanzen im gesamten Antriebsstrang von Vorteil sein kann.

Die hier beschriebenen Teilschritte des vollständigen Zyklus können bei beliebigen Verhältnissen der Antriebsdrehgeschwindigkeit zur Abtriebsdrehgeschwindigkeit stattfinden. Somit kann die Leistungsübertragung bei beliebigen Übersetzungsverhältnissen stattfinden. Das Getriebe verhält sich wie ein stufenloses Getriebe.

Im Gegensatz zu anderen Ausführungen von stufenlosen Getrieben, bei welchen das Übersetzungsverhältnis durch Krafteinwirkung auf gewisse Bauteile (Hebel) und dadurch ausgelöste Drehmomentungleichgewichte verändert wird, werden hier durch die Steuerung die Längen der Schritte (a) und (c) verändert, wodurch (durchschnittlich über den ganzen Zyklus) ein verändertes Drehmoment übertragen wird, was schlussendlich zu einer Beschleunigung oder Verzögerung von Antrieb und/oder Abtrieb und somit zu einer Übersetzungsänderung führt.

Befindet sich dieses Getriebe im eingangs beschriebenen Betriebsfall 1, ist durch die Getriebesteuerung die von der Antriebswelle aufgenommene durchschnittliche Leistung (über einen Zyklus) gerade gleich der durchschnittlichen vom Antrieb (Motor) auf die Antriebswelle abgegebenen Leistung zu halten. Dadurch ändert die durchschnittliche Drehgeschwindigkeit der Antriebswelle von Zyklus zu Zyklus nicht. Ebenso ist die (bei Vernachlässigung von Verlusten, gleiche) über den Zyklus durchschnittliche, an die Abtriebswelle abgegebene Leistung gleich der Widerstandsleistung zu halten, damit die durchschnittliche Drehgeschwindigkeit der Abtriebswelle nicht ändert. Unabhängig davon muss die Antriebssteuerung (Motorsteuerung) dafür sorgen, dass die vom Antrieb (Motor) abgegebene Leistung mit der Widerstandsleistung im Gleichgewicht ist.

Im Betriebsfall 2 ist durch die Getriebesteuerung die durchschnittliche vom Getriebe aufgenommene Leistung gleich der vom Antrieb (Motor) auf die Antriebswelle abgegebene Leistung zu halten. Im verlustfreien Fall wird die gleiche Leistung an den Abtrieb abgegeben. Da diese Leistung grösser ist als die Widerstandsleistung am Fahrzeug, beschleunigt der Abtrieb. Die Getriebesteuerung muss aufgrund der somit von Zyklus zu Zyklus ändernden Abtriebsdrehgeschwindigkeit dafür sorgen, dass das abgegebene durchschnittliche Drehmoment zusammen mit der aktuellen Abtriebsdrehgeschwindigkeit die (konstante) Antriebsleistung ergibt.

Im Betriebsfall 3 ist durch die Getriebesteuerung die durchschnittliche vom Getriebe abgegebene Leistung gleich der Widerstandsleistung zu halten, damit die Abtriebsdrehgeschwindigkeit konstant bleibt. Im verlustfreien Fall muss die gleiche Leistung vom Antrieb aufgenommen werden. Diese durchschnittliche Leistung ist grösser als die vom Antrieb (Motor) erzeugte Leistung wodurch die Antriebswelle verzögert wird. Die Getriebesteuerung muss aufgrund der von Zyklus zu Zyklus ändernden Antriebsdrehgeschwindigkeit dafür sorgen, dass das aufgenommene durchschnittliche Drehmoment zusammen mit dieser Antriebsdrehgeschwindigkeit die abzugebende Leistung ergibt. Gleichzeitig muss die Antriebssteuerung (Motorsteuerung) dafür sorgen, dass die vom Antrieb erzeugte Leistung kleiner ist als die abzugebende Leistung.

Für die Betrachtung der Vorgänge innerhalb eines Zyklus können die Drehgeschwindigkeiten von Antrieb und Abtrieb auf Grund der grossen Massenträgheiten als annähernd konstant betrachtet werden. Erst über ganze bzw. mehrere Zyklen entwickelt sich bei einem Leistungsungleichgewicht (Momentenungleichgewicht) an einer der Wellen eine namhafte Veränderung der Drehgeschwindigkeit.

Unabhängig davon ist dieses Getriebe in der Lage sehr schnell (innerhalb eines Zyklus) solche Ungleichgewichte zu erzeugen und somit eine der Wellen (typischerweise die Antriebswelle) rasch zu beschleunigen oder zu verzögern, also das Übersetzungsverhältnis rasch zu ändern, da die übertragene Leistung von einem Zyklus auf den andern verändert werden kann. Im Gegensatz zu den stufenlosen Reibrad- und Kettengetrieben entstehen während solchen transienten Vorgängen zudem keine erhöhten Getriebeverluste.

Weiter kann dieses stufenlose Getriebe, wie alle Getriebe, bei jedem Übersetzungsverhältnis Drehmomente vom Maximalwert bis zum Wert Null und sogar bis zu einem negativen Maximalwert übertragen. Während bei vielen Getrieben dazu keine Einflussnahme nötig ist, müssen hier die Längen der Schritte (a) und (c) synchron passend verändert werden. Zum Beispiel kann bei einer Fahrt auf einem welligen Strassenverlauf mit konstanter Geschwindigkeit in der Steigung Leistung übertragen werden und im Gefälle die Leistung auf null oder negative Werte zurück genommen werden. Es ist dabei unerheblich ob der Antrieb (Motor) seine Drehgeschwindigkeit konstant hält oder variiert.

Dieses stufenlose Getriebe kann auch verwendet werden um anzufahren, das heisst um die Abtriebswelle aus dem Stillstand zu beschleunigen. Beim Anwerfen des Motors muss dazu das Kupplungsmittel 7 so lange geschlossen sein, bis die Torsionsfeder 5 eine Energiemenge gespeichert hat, welche es dem Kupplungsrad 4 ermöglicht bei freiem Schwingen auf der Torsionsfeder 5 mindestens die Leerlaufdrehzahl des Motors zu erreichen. Anschliessend wird das Kupplungsmittel 7 geöffnet und das Kupplungsrad frei schwingen gelassen. Während dieses Vorgangs ist die Abtriebswelle 3 zu bremsen. Bei längerem Leerlaufbetrieb kann es notwendig sein, das Kupplungsrad 4 mittels des Kupplungsmittels 7 erneut mit dem Antrieb 2 zu verbinden, um durch Reibung verloren gegangene Energie zu ersetzen. Beim Anfahren wird die Bremse an der Abtriebswelle 3 gelöst und es kann direkt in den oben beschriebenen Betrieb übergegangen werden.

### Bezugszeichenliste

1 Getriebe
2 Antriebswelle
3 Abtriebswelle
4 Kupplungsrad
5 Torsionsfeder
6, 6' Abstützeinrichtung
7 erstes Kopplungsmittel
8 zweites Kopplungsmittel
9 Zahnradgetriebe, Untersetzungsgetriebe zwischen Abtriebswelle 3 und Abstützeinrichtung 6
12 Sensoren
13 Steuereinheit / Getriebesteuerung
20 Drehgeschwindigkeit der Antriebswelle 2
21 Drehgeschwindigkeit der Abtriebswelle 3
22 Drehgeschwindigkeit des Kupplungsrades 4
23 Drehgeschwindigkeit der Abstützeinrichtung 6
24 Verdrehwinkel der Torsionsfeder 5
25 Moment, das auf die Abtriebswelle wirkt
26 Energie, von der Antriebswelle 2 abgegeben (Abgabe = negative Werte)
27 Energie, von der Torsionsfeder 5 aufgenommen
28 Energie, von der Abtriebswelle 3 aufgenommen
A Achse der Antriebswelle
X, X' festes Übersetzungsverhältnis Abstützeinrichtung / Abtriebswelle 3
(a) Kopplung der Antriebswelle mit dem Kupplungsrad, Energieübertragung
(b) Entkopplung des Kupplungsrades, Freilauf
(c) Kopplung des Kupplungsrad mit der Abstützeinrichtung, Energieübertragung
(d) Entkopplung des Kupplungsrades, Freilauf

## Patentansprüche

1. Getriebe (1) zur Übertragung eines Drehmomentes bzw. einer Leistung von einer auf einer Achse (A) axial lagerbaren Antriebswelle (2) auf eine Abtriebswelle (3) bei stufenlos einstellbarem Übersetzungsverhältnis, umfassend ein Kupplungsrad (4) und eine Torsionsfeder (5), wobei das Kupplungsrad (4) auf derselben Achse (A) drehbar gelagert ist und durch die Torsionsfeder (5) mit der Abtriebswelle (3) verbindbar ist, sowie umfassend ein erstes Kopplungsmittel (7) zum Erzeugen und Aufheben einer drehfesten, flächigen, kraftschlüssigen ersten Kopplung zwischen der Antriebswelle (2) und dem Kupplungsrad (4), wobei das Getriebe (1) eine Abstützeinrichtung (6) umfasst, welche entweder mit einer festen Übersetzung von 1:X mit der Abtriebswelle (3) verbunden und drehbar ist, wobei X jede reelle Zahl zwischen -10 und 1 aber nicht 0 sein kann, oder mit einem Gehäuse des Getriebes fest verbunden ist sowie umfassend ein zweites Kopplungsmittel (8) zum Erzeugen und Aufheben einer drehfesten, kraftschlüssigen zweiten Kopplung zwischen der Abstützeinrichtung (6) und dem Kupplungsrad (4), **dadurch gekennzeichnet, dass** das Getriebe (1) mit einer Steuereinheit (13) und mehreren Sensoren (12) verbunden ist, wobei die Sensoren (12) zur Bestimmung von absoluten und/oder relativen Drehgeschwindigkeiten vom Kupplungsrad (4), Antriebswelle (2), Abtriebswelle (3) und/oder Abstützeinrichtung (6) dienen, sodass die Steuereinheit (13) aufgrund der ermittelten Drehgeschwindigkeiten zu geeigneten Zeitpunkten das Erzeugen und das Aufheben der Kopplung mittels der Kopplungsmittel (7, 8) auslösen kann, womit die Kopplungsmittel (7, 8) zu frei wählbaren Zeitpunkten koppelbar bzw. entkoppelbar sind.

2. Getriebe nach Anspruch 1, **dadurch gekennzeichnet, dass** das Kupplungsrad (4) koaxial zur Abtriebswelle (3) anordnenbar ist.

3. Getriebe nach Anspruch 1 oder 2, **dadurch gekennzeichnet, dass** die Abstützeinrichtung (6) fest mit einem Gehäuse des Getriebes verbunden ist.

4. Getriebe nach einem der vorhergehenden Ansprüche, **dadurch gekennzeichnet, dass** eines oder beide der Kopplungsmittel (7, 8) eine magnetische oder mechanische Kupplung zwischen der Antriebswelle (2) resp. der Abstützeinrichtung (6) und dem Kupplungsrad (4) umfassen.

5. Getriebe nach einem der vorhergehenden Ansprüche, **gekennzeichnet durch** mindestens eine zweite Abstützeinrichtung (6'), welche mit einer anderen festen Übersetzung 1:X' als die erste Abstützeinrichtung (6) zur Abtriebswelle (3) drehbar angeordnet ist.

6. Getriebe nach einem der vorhergehenden Ansprüche, **dadurch gekennzeichnet, dass** die Torsionsfeder (5) eine progressive Charakteristik aufweist.

7. Getriebe nach einem der vorhergehenden Ansprüche, **gekennzeichnet durch** ein weiteres Kopplungsmittel zwischen der Abtriebswelle (3) und dem Kupplungsrad (4).

8. Verfahren zur Übertragung eines Drehmomentes bzw. einer Leistung unter Verwendung eines Getriebes (1) nach einem der vorhergehenden Ansprüchen 1-7 , wobei
(a) das Kupplungsrad (4) durch das erste Kopplungsmittel (7) an die Antriebswelle (2) gekoppelt wird, sobald das Kupplungsrad (4) und die Antriebswelle (2) exakt dieselbe Drehgeschwindigkeiten (22, 20) aufweisen, um die Torsionsfeder (5) zu spannen und gleichzeitig Energie (28) von der Antriebswelle (2) über die Torsionsfeder (5) auf die Abtriebswelle (3) zu übertragen;
(b) bei einem hohen Verdrehwinkel (24) der Torsionsfeder (5) das Kupplungsrad (4) von der Antriebswelle (2) entkoppelt wird, um das Kupplungsrad (4) mit sinkender Drehgeschwindigkeit (22) im Freilauf weiterdrehen zu lassen;
(c) das Kupplungsrad (4) durch das zweite Kopplungsmittel (8) an die Abstützeinrichtung (6) gekoppelt wird, sobald das Kupplungsrad (4) und die Abstützeinrichtung (6) exakt dieselbe Drehgeschwindigkeiten (22, 23) aufweisen, um Energie (28) der Torsionsfeder (5) auf die Abtriebswelle (3) zu übertragen;
(d) bei einem geringen Verdrehwinkel (24) der Torsionsfeder (5) das Kupplungsrad (4) von der Abstützeinrichtung (6) entkoppelt wird, um das Kupplungsrad (4) im Freilauf wieder aufschwingen zu lassen, bis zu einem Zeitpunkt, an dem sich das Kupplungsrad (4) bei sinkender Drehgeschwindigkeit (22) wieder exakt gleich schnell dreht wie die Antriebswelle (2), wobei wieder mit Schritt (a) fortgefahren wird.

9. Verfahren nach Anspruch 8, **dadurch gekennzeichnet, dass** die Drehgeschwindigkeit der Abstützeinrichtung (6) konstant Null ist.

10. Verfahren nach Anspruch 8 oder 9, **dadurch gekennzeichnet, dass** ein kompletter Zyklus von (a) bis zum nächsten (a) höchstens 50 ms dauert.

11. Verfahren nach einem der Ansprüche 8 bis 10, **dadurch gekennzeichnet, dass** die Zeit zum Koppeln und Entkoppeln jeweils höchstens 0.5 ms dauert.

12. Verfahren nach einem der Ansprüche 8 bis 11, **dadurch gekennzeichnet, dass** eine Steuereinheit (13) die Einleitung der Schritte (a) bis (d) veranlasst.

13. Verfahren nach einem der Ansprüche 8 bis 12 **dadurch gekennzeichnet, dass**, vorzugsweise im Schritt (d), ein weiteres Kopplungsmittel zwischen der Abtriebswelle (3) und dem Kupplungsrad (4) zu einem Zeitpunkt gekoppelt wird, wenn die Abtriebswelle (3) und das Kupplungsrad (4) die gleiche Drehgeschwindigkeiten (21, 22) aufweisen, und nach einer gewissen Zeit wieder gelöst wird.

## Claims

1. A transmission (1) for transmitting a torque or power from a drive shaft (2) that can be axially supported on a shaft (A) to an output shaft (3) given an continuously variable transmission ratio, comprising a coupling wheel (4) and a torsion spring (5), wherein the coupling wheel (4) is rotatably mounted on the same shaft (A) and can be connected with the output shaft (3) by the torsion spring (5), and also comprising a first coupling means (7) for generating and canceling a rotationally fixed, planar, force-fitting first coupling between the drive shaft (2) and coupling wheel (4), wherein the transmission (1) comprises a support device (6), which either is connected and can rotate with the output shaft (3) at a fixed gearing of 1 : X, wherein X can be any real number between -10 and 1 but not 0, or is fixedly connected with a housing of the transmission, and comprises a second coupling (8) means for generating and canceling a rotationally fixed, force-fitting second coupling between the support device (6) and coupling wheel (4), **characterized in that** the transmission (1) is connected with a control unit (13) and several sensors (12), wherein the sensors (12) are used to determine absolute and/or relative rotational speeds of the coupling wheel (4), drive shaft (2), output shaft (3) and/or support device (6), so that the control unit (13) can initiate the generation and cancelation of the coupling by means of the coupling means (7, 8) based on the determined rotational speeds at suitable times, so that the coupling means (7, 8) can be coupled or decoupled at freely selectable times.

2. The transmission according to claim 1, **characterized in that** the coupling wheel (4) can be arranged coaxially to the output shaft (3).

3. The transmission according to claim 1 or 2, **characterized in that** the support device (6) is fixedly connected with a housing of the transmission.

4. The transmission according to one of the preceding claims, **characterized in that** one or both of the coupling means (7, 8) consist (s) of a magnetic or mechanical coupling between the drive shaft (2) or support device (6) and the coupling wheel (4).

5. The transmission according to one of the preceding claims, **characterized by** at least one second support device (6'), which is rotatably arranged relative to the output shaft (3) at a fixed gearing 1:X' different than the first support device (6).

6. The transmission according to one of the preceding claims, **characterized in that** the torsion spring (5) has a progressive characteristic.

7. The transmission according to one of the preceding claims, **characterized by** an additional coupling means between the output shaft (3) and coupling wheel (4).

8. A method for transmitting a torque or power using a transmission (1) according to one of the preceding claims 1 to 7, wherein:
(a) the coupling wheel (4) is coupled to the drive shaft (2) by the first coupling means (7) as soon as the coupling wheel (4) and drive shaft (2) have the exact same rotational speeds (22, 20), so as to tension the torsion springs (5) and simultaneously transmit energy (28) from the drive shaft (2) to the output shaft (3) via the torsion spring (5);
(b) the coupling wheel (4) is decoupled from the drive shaft (2) at a high angle of twist (24) of the torsion spring (5), so as to allow the coupling wheel (4) to freewheel and continue rotating as the rotational speed (22) drops;
(c) the coupling wheel (4) is coupled to the support device (6) by the second coupling means (8) as soon as the coupling wheel (4) and support device (6) have the exact same rotational speeds (22, 23), so as to transmit energy (28) of the torsion spring (5) to the output shaft (3);
(d) the coupling wheel (4) is decoupled from the support device (6) at a low angle of twist (24) of the torsion spring (5), so as to allow the coupling wheel (4) to rise again while freewheeling until such time as the coupling wheel (4) once again rotates at exactly the same speed as the drive shaft (2) as the rotational speed (22) drops, wherein the process continues again with step (a).

9. The method according to claim 8, **characterized in that** rotational speed of the support device (6) is a constant zero.

10. The method according to claim 8 or 9, **characterized in that** a complete cycle from (a) to the next (a) lasts at most 50 ms.

11. The method according to one of claims 8 to 10, **characterized in that** the respective time for coupling and decoupling lasts at most 0.5 ms.

12. The method according to one of claims 8 to 11, **characterized in that** a control unit (13) initiates the introduction of steps (a) to (d).

13. The method according to one of claims 8 to 12, **characterized in that**, preferably in step (d), an additional coupling means is coupled between the output shaft (3) and coupling wheel (4) at a point in time where the output shaft (3) and coupling wheel (4) have the same rotational speeds (21, 22), and are again detached after a certain period of time.

## Revendications

1. Transmission (1), destinée à transmettre un couple ou une puissance d'un arbre menant (2) susceptible d'être logé en direction axiale sur un axe (A) sur un arbre mené (3), avec un rapport de démultiplication à réglage continu, comprenant une roue d'accouplement (4) et un ressort de torsion (5), la roue d'accouplement (4) étant logée en rotation sur le même axe (A) et étant susceptible d'être assemblée par le ressort de torsion (5) avec l'arbre mené (3), et comprenant un premier moyen de couplage (7), destiné à créer et à annuler un premier couplage par complémentarité de force à plat, solidaire en rotation entre l'arbre menant (2) et la roue d'accouplement (4), la transmission (1) comprenant un système d'appui (6) lequel est soit relié avec une démultiplication fixe de 1 : X avec l'arbre mené (3) et est rotatif, X pouvant être tout nombre réel compris entre -10 et 1, mais pas O, ou est relié de manière fixe avec un boîtier de la transmission, et comprenant un deuxième moyen de couplage (8), destiné à créer et à annuler un deuxième couplage par complémentarité de force, solidaire en rotation entre le système d'appui (6) et la roue d'accouplement (4), **caractérisée en ce que** la transmission (1) est reliée avec une unité de commande (13) et avec plusieurs capteurs (12), les capteurs (12) servant à déterminer des vitesses de rotation absolues et/ou relatives de la roue d'accouplement (4), de l'arbre menant (2), de l'arbre mené (3) et/ou du système d'appui (6), de sorte que sur la base des vitesses de rotation déterminées, l'unité de commande (13) soit apte à déclencher à des moments adaptés la création et l'annulation du couplage à l'aide des moyen de couplage (7, 8), suite à quoi, les moyens de couplage (7, 8) sont aptes à être couplés et découplés à des moments librement sélectionnables.

2. Transmission selon la revendication 1, **caractérisée en ce que** la roue d'accouplement (4) est apte à être placée de manière coaxiale par rapport à l'arbre mené (3) .

3. Transmission selon la revendication 1 ou 2, **caractérisée en ce que** le système d'appui (6) est relié de manière fixe avec un boîtier de la transmission.

4. Transmission selon l'une quelconque des revendications précédentes, **caractérisée en ce que** l'un ou les deux parmi les moyens de couplage (7, 8) comprennent un couplage magnétique ou mécanique entre l'arbre menant (2), respectivement le système d'appui (6) et la roue d'accouplement (4).

5. Transmission selon l'une quelconque des revendications précédentes, **caractérisée par** au moins un deuxième système d'appui (6'), lequel est placé en rotation avec une autre démultiplication fixe 1 : X' que le premier système d'appui (6) vers l'arbre mené (3).

6. Transmission selon l'une quelconque des revendications précédentes, **caractérisée en ce que** le ressort de torsion (5) fait preuve d'une caractéristique progressive.

7. Transmission selon l'une quelconque des revendications précédentes, **caractérisée par** un moyen de couplage supplémentaire entre l'arbre mené (3) et la roue d'accouplement (4).

8. Procédé, destiné à transmettre un couple ou une puissance en utilisant une transmission (1) selon l'une quelconque des revendications précédentes 1 à 7,
(a) lors duquel, on couple la roue d'accouplement (4) à l'aide du premier moyen de couplage (7) avec l'arbre menant (2), dès que la roue d'accouplement (4) et l'arbre menant (2) présentent exactement les mêmes vitesses de rotation (22, 20), pour tendre le ressort de torsion (5) et pour transmettre simultanément de l'énergie (28) de l'arbre menant (2) par l'intermédiaire du ressort de torsion (5) sur l'arbre mené (3) ;
(b) lors duquel, avec un angle de torsion (24) élevé du ressort de torsion (5), on découple la roue d'accouplement (4) de l'arbre menant (2), pour continuer à laisser tourner la roue d'accouplement (4) à vitesse de rotation (22) décroissante en roue libre ;
(c) lors duquel, on couple la roue d'accouplement (4) à l'aide du deuxième moyen de couplage (8) avec le système d'appui (6), dès que la roue d'accouplement (4) et le système d'appui (6) présentent exactement les mêmes vitesses de rotation (22, 23), pour transmettre de l'énergie (28) du ressort de torsion (5) sur l'arbre mené (3) ;
(d) lors duquel, avec un faible angle de torsion (24) du ressort de torsion (5), on découple la roue d'accouplement (4) du système d'appui (6), pour faire s'élancer à nouveau la roue d'accouplement (4) en roue libre, jusqu'à un moment auquel la roue d'accouplement (4) à vitesse de rotation (22) décroissante tourne de nouveau exactement aussi vite que l'arbre menant (2), étant ensuite poursuivi avec l'étape (a).

9. Procédé selon la revendication 8, **caractérisé en ce que** la vitesse de rotation du système d'appui (6) est constamment de zéro.

10. Procédé selon la revendication 8 ou 9, **caractérisé en ce qu'**un cycle complet de (a) jusqu'au prochain (a) dure au plus 50 ms.

11. Procédé selon l'une quelconque des revendications 8 à 10, **caractérisé en ce que** le temps de couplage et de découplage dure au plus 0.5 ms.

12. Procédé selon l'une quelconque des revendications 8 à 11, **caractérisé en ce qu'**une unité de commande (13) initie l'introduction des étapes (a) à (d).

13. Procédé selon l'une quelconque des revendications 8 à 12, **caractérisé en ce que** de préférence dans l'étape (d), on couple un moyen de couplage supplémentaire entre l'arbre mené (3) et la roue d'accouplement (4) à un moment lorsque l'arbre mené (3) et la roue d'accouplement (4) présentent les mêmes vitesses de rotation (21, 22), et on le redésolidarise après un certain temps.
